# EUROPEAN PATENT APPLICATION

(11) **EP 2 295 843 A1**
(43) Date of publication of application: **16.03.2011**
(21) Application number: 10009541.3
(22) Date of filing: 14.09.2010
(51) Int. Cl.: F16L 53/00, F16L 59/14

(54) **Heterogeneous element for heat exchange**

(30) Priority: 15.09.2009 IT SV20090003
(71) Applicant: Scarzella, Luciano, 17017 Millesimo-Savona (SV) (IT); Scarzella, Cristina, 17017 Millesimo-Savona (SV) (IT); Scarzella, Maria Grazia, 17017 Millesimo-Savona (SV) (IT)
(72) Inventor: Scarzella, Luciano, 17017 Millesimo-Savona (SV) (IT); Scarzella, Cristina, 17017 Millesimo-Savona (SV) (IT); Scarzella, Maria Grazia, 17017 Millesimo-Savona (SV) (IT)
(74) Representative: Sergio, Stefano

(57) **Abstract**

SUMMARY

The invention consists of a heat exchange element made in various typologies of materials in order to optimise the functional characteristics in reference to the transmission of heat, to the compatibility with the thermovector fluid(s) used and to the workability. The invention consists of one or more conduits transporting the thermovector fluid (pos. 1) together with an element of thermal energy transfer (pos. 2) at the contact face with the controlled temperature object (pos. 3) which may have different profiles coinciding with the surface contacted; the simultaneous use of different typologies of materials allows one to optimise the compatibility of the conduits (pos. 1) with the thermovector fluid (resistance to any possible physical-chemical aggression) and the thermal and technological characteristics of the transfer element (pos. 2) (thermal conductivity, workability).

## Description

### Existing situation

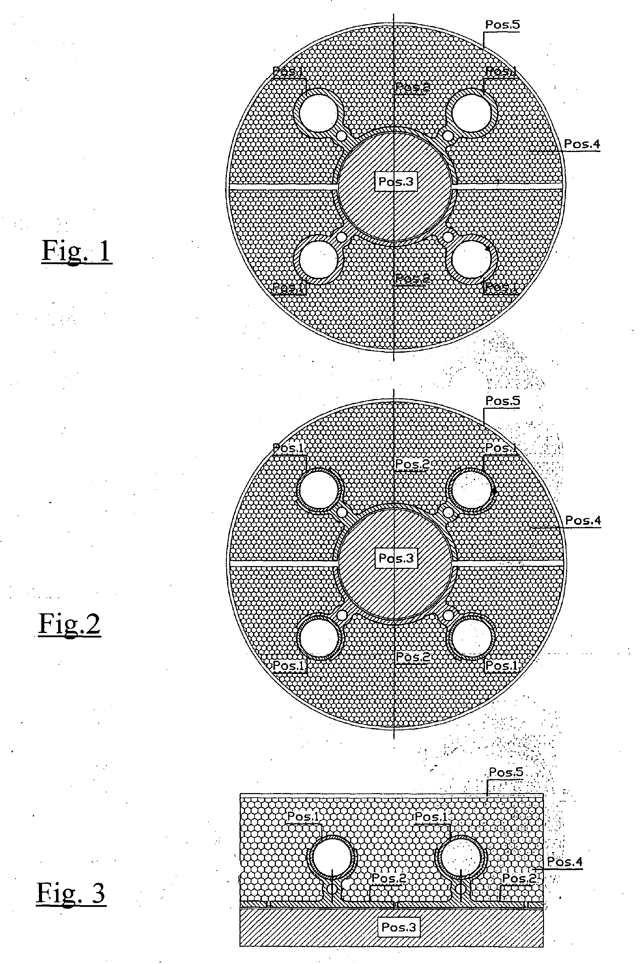

In the current state of the art there is a system of industrial thermostat control subject of an International Patent (European Patent No. 0764810 owned by Luciano Scarzella, Località Piangiaschi no. 17 17017 Millesimo (SV)/IT) in the name of Luciano Scarzella, coinciding with the undersigned applicant. In Figure 1 one shows, as an example, a case of the various applications envisaged for the aforesaid patent: *thermostat control of a process pipe.* The system consists of: process piping (element to control thermostatically) (pos. 3); temperature controlling fluid in the conduits (pos. 1) created in one piece with the heat exchange element (pos. 2) and external insulating element (pos. 4); external lagging element (pos. 5); the system allows heat exchange between the process pipe and the thermovector fluid in conditions of thermal insulation towards the external environment (insulation pos. 4) also guaranteeing mechanical protection by means of an external lagging (pos. 5). Optimisation of the system is reached making three conditions maximum at the same time: *good thermal conductivity, good resistance to chemical-physical aggression, good mechanical and technological features of the materials used* Not always can all the conditions be correctly satisfied at the same time with the choice for the heat exchange element in a single material, while it becomes easier with the possibility of using more materials.

### Description of the invention

The invention consists in the creation of a heat exchange element in different typologies of materials in order to optimise the functional characteristics in reference to the transmission of heat, to the compatibility with the thermovector fluid(s) used and to the workability. The invention (Figures 2 and 3) consists of one or more conduits transporting the thermovector fluid (pos. 1) in contact with an element of thermal energy transfer (pos. 2) at the face of the element to be thermostatically controlled (pos. 3). The routes that transport the thermovector fluid (pos. 1) may be made with different materials than those used to create the element of energy transfer (pos. 2) and therefore may have chemical-physical properties compatible with the degree of aggression of the thermovector fluid (stainless steel, thermoplastic materials etc.), thereby making it possible to use thermovector fluids other than water and recovery of the remnants of thermal energy deriving from various industrial processes. The element of thermal energy transfer (pos. 2), in turn, may be made of materials having at the same time excellent characteristics of conductivity and excellent technological properties; as an example, aluminium, which possesses excellent heat conductivity and its easy workability with extrusion processes allow the creation of complex profiles suitable to allow perfect interfacing with the surfaces of the elements to be thermostatically controlled (Figure 2 - cylindrical profile - Figure 3 - flat profile) and connection with the routes of the thermovector fluid (pos. 1). The invention therefore allows one: to optimise the characteristics of the heat exchange element (pos 1 + pos. 2), adjusting them from time to time to the characteristics of the thermovector fluid thereby allowing the use of any fluid and making it possible to safely recover remnants of heat deriving from industrial processes, otherwise destined to disposal in the environment. The coupling of the water routes with the thermovector element may be carried out in many ways: with mechanical coupling, of which one shows an example, welded or braised coupling, gluing etc.

## Claims

1. Heat exchange element comprising one or more conduits (pos. 1) transporting a thermovector fluid joined with an element of thermal energy transfer (pos 2) which is in contact with an object to be thermostatically controlled (pos. 3), an external thermal insulation (pos. 4) and one external lagging element (pos. 5) **characterized by** the fact that
the conduits transporting the thermovector fluid and the element of thermal energy transfer are made with materials different from one other.

2. Element according to claim 1, wherein the conduits transporting the thermovector fluid and the element of thermal energy transfer are assembled by means of connections of mechanical type like welding, brazing, gluing, etc..

3. Element according to claim 1, wherein the element of thermal energy transfer is made with a geometrical shape suitable to the coupling with the element to be thermostatically controlled and it is made with high heat conductivity material.
